# EUROPÄISCHE PATENTANMELDUNG

(11) **EP 3 722 190 A1**
(43) Veröffentlichungstag der Anmeldung: **14.10.2020**
(21) Anmeldenummer: 20020162.2
(22) Anmeldetag: 08.04.2020
(51) Int. Cl.: B62K 3/00, A63C 17/04, B62K 5/027, B62K 5/05, B62K 5/08, B62K 5/10

(54) **ROLLBRETT**

(30) Priorität: 10.04.2019 DE 102019002632
(71) Anmelder: Pascher + Heinz GmbH, 81829 München (DE)
(72) Erfinder: Pascher, Reinhard, 85540 Salmdorf/Haar (DE); Schirrmacher, Tao, 80339 München (DE)
(74) Vertreter: von Bülow, Tam

(57) **Zusammenfassung**

Das Rollbrett mit einem Trittbrett (2) und zwei Vorderrädern (3,4), die an einer Vorderachse (5) gelagert sind, ist dadurch lenkbar, dass die Vorderachse (5) um eine senkrecht zur Fahrebene stehende Achse schwenkbar mit dem Trittbrett (2) verbunden ist. Die Vorderachse (5) ist dabei in Drehrichtung federelastisch mit dem Trittbrett (2) gekoppelt. (Figur 4)

## Beschreibung

Die Erfindung betrifft ein Rollbrett gemäß dem Oberbegriff des Patentanspruches 1. Insbesondere betrifft die Erfindung eine Lenkeinrichtung für ein solches Rollbrett, das generell auch als Skateboard bezeichnet wird. Nach der Erfindung können aber auch Roller hierunter fallen.

Die DE 20 2008 006 764 U1 beschreibt ein Rollbrett mit einem Griffelement als Lenkmittel für Rollen, die bei einer Lenkbewegung des Rollbrettes um eine quer zu ihrer Achse stehenden Lenkachse drehbar angeordnet sind.

Die DE 20 2015 0153 05 U1 zeigt ein Rollbrett mit einem Deck, das als Standfläche dient, sowie mit zwei neigungsaktivierten Lenkachsen und vier Rädern.

Aufgabe der Erfindung ist es, ein Rollbrett mit einer vereinfachten Lenkeinrichtung zu schaffen, die auch sehr kleine Kurvenradien ermöglicht, mit geringem Kraftaufwand zu betätigen ist und nach einer Auslenkung geschmeidig und dynamisch in die Ausgangsstellung für Geradeausfahrt zurückkehrt.

Diese Aufgabe wird durch die im Patentanspruch 1 angegebenen Merkmale gelöst. Vorteilhafte Ausgestaltungen und Weiterbildungen der Erfindung sind den Unteransprüchen entnehmen.

Im Folgenden wird die Erfindung anhand von Ausführungsbeispielen im Zusammenhang mit der Zeichnung ausführlicher erläutert. Es zeigt:
Figur 1 ein Rollbrett mit einer Lenkeinrichtung;
Figur 2 eine Ansicht schräg von oben auf wesentliche Elemente der Lenkeinrichtung;
Figur 3 einen Schnitt der Lenkeinrichtung längs der Linie A-A der Figur 2;
Figur 4 eine Explosionsdarstellung der Lenkeinrichtung nach einem weiteren Ausführungsbeispiel der Erfindung.

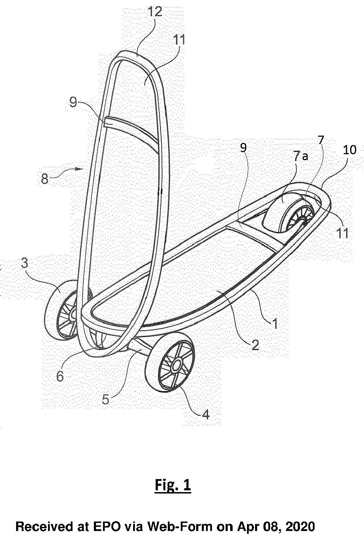

Das Rollbrett der Figur 1 hat einen Rahmen 1, an dem ein Trittbrett 2 befestigt ist. An dem Rahmen 1 sind zwei Vorderräder 3 und 4 angebracht und zwar mittels einer gemeinsamen Vorderachse 5, die über ein Drehlager 6 an dem Rahmen 1 oder dem Trittbrett 2 befestigt ist. Die beiden Vorderräder 3 und 4 befinden sich, wie ihr Name schon sagt, im vorderen Bereich des Rollbretts bezogen auf dessen normale Fahrtrichtung.

Am hinteren Bereich des Rahmens 1 ist ein einzelnes Hinterrad 7 angebracht, das hier mit einer Radbremse 7a versehen ist. Am vorderen Bereich des Rollbrettes ist ein schwenkbarer Bügel 8 angebracht, der zwischen einer im wesentlichen senkrechten Stellung, die in Figur 1 dargestellt ist, und einer wesentlichen horizontalen Stellung, schwenkbar ist. In beiden Stellungen kann der Bügel 8 fixiert werden, beispielsweise durch einen federvorgespannten Raststift, der in zugeordnete Löcher einrasten kann.

Im Ausführungsbeispiel der Figur 1 ist der Bügel 8 ein in Draufsicht etwa elliptischer geschlossener Bügel, der in seinem hinteren Bereich noch eine Querstrebe 9 aufweist, die in der im wesentlichen horizontalen Stellung des Bügels 8 auf dem Rahmen 1 und/oder dem Trittbrett 2 zur Auflage kommt.

Im Ausführungsbeispiel der Figur 1 ist der Rahmen 1 nach hinten über das Hinterrad 7 hinaus verlängert, sodass das dortige hintere Ende 10 gegenüber dem Hinterrad 7 einen Abstand aufweist der einen Freiraum 11 für einen Griffbereich bildet. Wahlweise kann dann der Bügel 8 so lang sein, dass sein hinteres Ende 12 mit dem hinteren Ende 10 des Bügels 1 kongruent liegt oder auch über das hintere Ende 10 hinausragt, sodass der den Griffbereich bildende Freiraum 11 zwischen den beiden Enden 10 und 12 liegt.

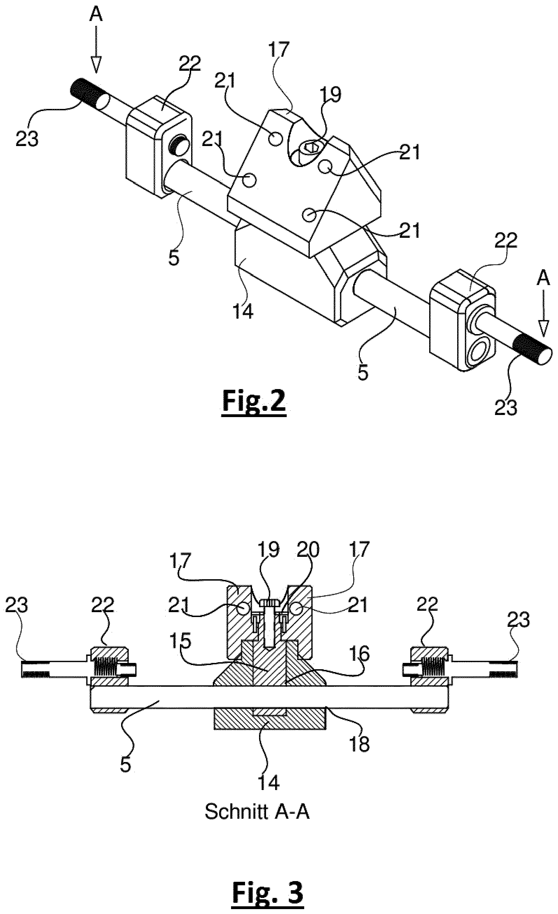

Figur 2 zeigt die Lenkeinrichtung und Teile der Vorderachse 5 in Draufsicht schräg von oben gesehen. Das Drehlager 6 hat einen Halteblock 14, durch den hindurch die Vorderachse 5 gesteckt ist. In dem Halteblock 14 ist ein Drehzapfen 15 (Fig. 3) gehalten, der senkrecht zur Vorderachse 5 verläuft und eine Öffnung 16 hat, durch die hindurch die Vorderachse 5 gesteckt ist. Damit ist ein unteres Ende des Drehzapfens 15 an der Vorderachse 5 fixiert, sodass sich dieses Ende relativ zum Halteblock 14 nicht drehen kann.

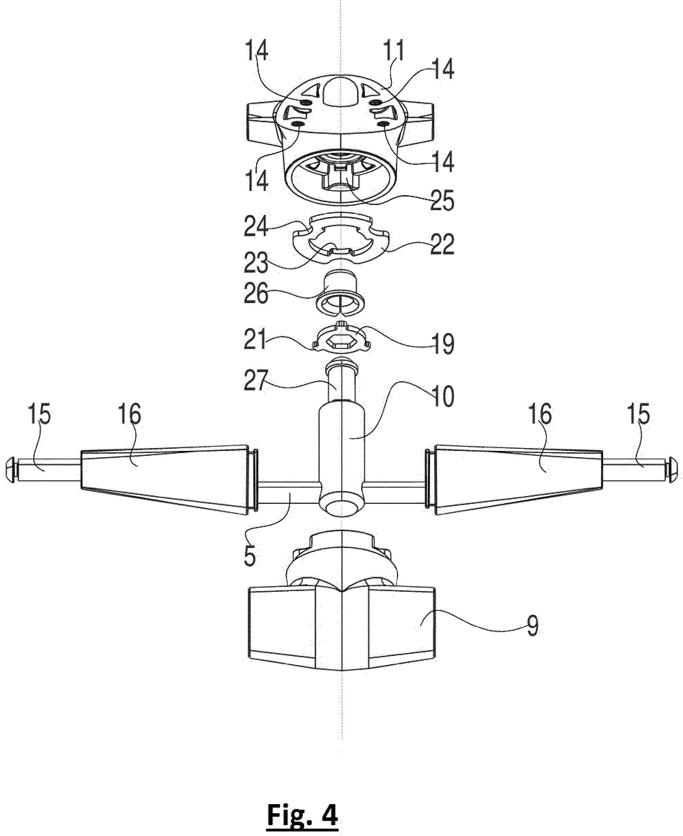

In der Schnittdarstellung der Figur 3 erkennt man, dass ein oberes Ende des Drehzapfens 15 aus dem Halteblock 14 herausragt und in einen Befestigungsblock 17 hineinragt, der einen Teil des Drehlagers 6 bildet und gegenüber dem Halteblock 14 um die Achse des Drehzapfen 15 gedreht werden kann. Bei einem bevorzugten Ausführungsbeispiel der Erfindung, das weiter unten im Zusammenhang mit Figur 4 detaillierter beschrieben wird, ist der Halteblock 14 federelastisch, beipielsweise aus gummielastischem Material, und sorgt nach einer Kurvenfahrt für eine selbsttätige Rückstellung in die Geradeausfahrt. Bei dieser Variante ist der Drehzapfen 15 starr.

Bei einem anderen Ausführungsbeispiel der Erfindung ist der Drehzapfen 15 aus einem federelastischem Material, während der Halteblock 14 aus starrem Material ist. Das obere Ende des Drehzapfen 15 ist fest und unverdrehbar mit dem Befestigungsblock 17 verbunden.

Der Drehzapfen 15 hat in dem Bereich, der innerhalb des Halteblockes 14 liegt einen größeren Durchmesser als in dem Bereich, der innerhalb des Befestigungsblockes 17 liegt. Im oberen Bereich des Halteblockes 14 ist dessen Durchmesser geringer als im unteren Bereich und dient als Führung für einen Abschnitt des Befestigungsblockes 17, womit sich dort ein Drehlager ergibt, bei dem der Drehzapfen 15 die Drehachse bildet.

Die drehfeste Verbindung zwischen dem Drehzapfen 15 und der Vorderachse 5 erfolgt dadurch, dass die Vorderachse 5 durch ein Loch 16 in dem Drehzapfen 15 hindurchgesteckt ist. Entsprechende hat auch der Halteblock 14 ein Loch 18, das mit dem Loch 16 des Drehzapfens 15 fluchtet, sodass die Vorderachse 5 durch beide Löcher 16 und 18 hindurch gesteckt werden kann.

Die Befestigung des Drehzapfens 15 an dem Halteblock 14 erfolgt in diesem Ausführungsbeispiel durch eine Schraube 19, die in den Befestigungsblock 17 und den Drehzapfen 15 eingeschraubt ist, wobei noch eine Unterlegscheibe 20 vorgesehen sein kann.

Der Befestigungsblock 17 hat hier vier Schraublöcher 21, mittels derer er an dem Trittbrett 1 (Figur 1) angeschraubt werden kann.

Im Ergebnis lässt sich also die Vorderachse 5 mit den Vorderrädern 3 und 4 um den Drehzapfen 15 drehen, sodass das Rollbrett gelenkt werden kann.

Beim Ausführungsbeispiel der Figuren 2 und 3 sind die effektiven Drehachsen 23 der Vorderräder 3 und 4 gegenüber der Vorderachse 5 durch Distanzstücke 22 radial versetzt angeordnet, womit sich ein verbesserter Geradeauslauf ergibt.

Bei dem Ausführungsbeispiel der Figur 4 ist der Drehzapfen 15 wie bei den vorherigen Ausführungsbeispielen mit der Vorderachse 5 verbunden, die durch die Öffnung 16 des Drehzapfens 15 hindurchgesteckt ist. Die Drehachsen 23 der Räder sind hier ebenfalls über die Distanzstücke 22 mit der Vorderachse 5 verbunden.

Im Gegensatz zum Ausführungsbeispiel der Figuren 2 und 3 ist hier der Halteblock 14 insgesamt aus elastischem Material. Der Drehzapfen 15 ist in der Zeichenebene der Figur 14 senkrecht von oben in den Halteblock 14 eingesteckt und die Vorderachse 5 ist senkrecht dazu durch den Halteblock 14 und die Öffnung 16 im Drehzapfen 15 eingesteckt. Der elastische Halteblock 14 ist hier mit dem Befestigungsblock 17 gekoppelt und zwar so, dass sich der Drehzapfen 15 zusammen mit der Vorderachse 5 um die Achse des Drehzapfens 15 gegenüber dem Befestigungsblock 17 innerhalb vorbestimmter Grenzen verdrehen kann, was durch die federelastischen Eigenschaften des Halteblocks 14 sichergestellt ist.

Die erwähnte Begrenzung der Drehung des Drehzapfen 15 erfolgt durch mit dem Drehzapfen 15 gekoppelte erste und zweite Scheiben 24 und 25. Die erste Scheibe 24 hat einen Innensechskant 26, der auf einen Außensechskant 27 an einem Endbereich 28 des Drehzapfen 15 aufgesetzt ist, so dass die Scheibe 24 drehfest mit dem Drehzapfen 15 verbunden ist. Weiter hat die Scheibe 24 mehrere radial nach außen vorspringende Begrenzungsanschläge 29, die mit Gegenanschlägen 30 der zweiten Scheibe 25 zusammenwirken, wobei die beiden Scheiben 24 und 25 im montierten Zustand in einer gemeinsamen Ebene liegen. Die zweite Scheibe 25 hat an ihrem Außenumfang mehrere Einbuchtungen 31, die mit Vorsprüngen 32 im Inneren des Befestigungsblockes 17 zusammenwirken, sodass sich die zweite Scheibe 25 gegen den Befestigungsblock 17 nicht verdrehen kann. Durch diese Anordnung kann sich der Drehzapfen 15 nur innerhalb eines begrenzten Bereiches relativ zu den Befestigungsblock 17 verdrehen, da die Vorsprünge 29 durch die gegen Anschläge 30 der zweiten Scheibe 25 in ihrer Drehrichtung begrenzt werden.

Die erste Scheibe 24 ist im Inneren der zweiten Scheibe 25 angeordnet, die radial nach innen vorspringende Begrenzungsanschläge 30 aufweist, die eine relative Verdrehung der ersten Scheibe 24 zusammen mit dem Drehzapfen 15 begrenzen. Die zweite Scheibe 25 ist ihrerseits unverdrehbar in dem Befestigungsblock 17 gehalten, indem sie an ihrem Außenumfang Vertiefungen 31 aufweist, in die radial vorstehende Vorsprünge 32 im Inneren des Befestigungsblockes 17 eingreifen.

Für eine exaktere Führung des Drehzapfens 15 ist noch eine Hülse 33 vorgesehen, die auf ein zum Befestigungsblock 17 weisendes Ende 28 des Drehzapfen 15 aufgesteckt ist, das einen geringeren Durchmesser hat als der Rest des Drehzapfens 15. Die Hülse 33 ist in axialer Richtung geschlitzt und wirkt so auch als federnde Lagerung für das Ende des Drehzapfen 15 in dem Befestigungsblock 17.

Der Halteblock 14 hat an seiner zum Befestigungsblock 17 weisenden Seite einen zylindrischen Vorsprung 33, der in den Befestigungsblock 17 eingreift. Am Außenumfang des zylindrischen Vorsprungs 33 sind mehrere radial und axial nach Innen weisenden Ausnehmungen 34 vorhanden, die an den Vorsprüngen 32 des Befestigungsblocks 17 ausgerichtet sind, sodass das zum Befestigungsblock 17 weisende Ende des Halteblocks 14 dort fixiert ist. Da der Halteblock 14 aus federelastischem Material ist, gestattet er einerseits eine Verdrehung der Drehachse 5 relativ zum Befestigungsblock 17 um die Achse des Drehzapfen 15 innerhalb der durch die Begrenzungsanschläge 29 und 30 definierten Bereiche und andererseits bewirkt er aufgrund seiner Federungseigenschaften eine Rückstellkraft die für eine Geradeausfahrt sorgt.

Zusammenfassend wird durch die Erfindung eine besonders einfache und stabile Lenkeinrichtung geschaffen, die auch sehr kleine Kurvenradien ermöglicht, mit geringem Kraftaufwand zu betätigen ist und nach einer Auslenkung dynamisch und geschmeidig in die Ausgangsstellung für eine Geradeausfahrt zurückkehrt.

## Patentansprüche

1. Rollbrett mit einem Trittbrett (2), mindestens einem Hinterrad (7) und zwei lenkbaren Vorderrädern (3, 4), die an einer Vorderachse (5) gelagert sind, wobei die Vorderachse (5) über einen Drehzapfen (15) mit dem Trittbrett (2) verbunden ist, **dadurch gekennzeichnet, dass** die Vorderachse (5) federelastisch drehbar mit dem Trittbrett (2) gekoppelt ist.

2. Rollbrett nach Anspruch 1, **dadurch gekennzeichnet, dass** die federelastische Kopplung zwischen der Vorderachse (5) und dem Trittbrett (1) durch einen federelastischen Halteblock (14) erfolgt, der die Vorderachse (5) und den Drehzapfen (15) teilweise umgibt, und der mit einem Ende drehfest mit einem Befestigungsblock (17) verbunden ist, wobei der Befestigungsblock (17) mit dem Trittbrett (2) verbunden ist.

3. Rollbrett nach Anspruch 2, **dadurch gekennzeichnet, dass** die Drehung des Drehzapfen (15) durch eine mit dem Drehzapfen (15) gekoppelte Scheibe (24) mit Vorsprüngen (29) begrenzt ist, die innerhalb einer mit dem Befestigungsblock (17) drehfest verbundenen zweiten Scheibe (25) angeordnet ist, wobei die zweite Scheibe (25) Vorsprünge (30) als Drehbegrenzungsanschlag aufweist und drehfest mit dem Befestigungsblock (17) verbunden ist.

4. Rollbrett nach Anspruch 1, **dadurch gekennzeichnet, dass** die federelastische Kopplung durch einen federelastischen Drehzapfen (15) erfolgt, dessen eines Ende drehfest mit der Vorderachse (5) und dessen anderes Ende drehfest mit einem Befestigungsblock (17) verbunden ist, wobei der Befestigungsblock (17) mit dem Trittbrett (2) verbunden ist.

5. Rollbrett nach Anspruch 4, **dadurch gekennzeichnet, dass** der Befestigungsblock (17) gegenüber einem Halteblock (14) drehbar gelagert ist, wobei der Befestigungsblock (17) und der Halteblock (14) mittels des federelastischen Drehzapfens (15) miteinander verbunden sind.

6. Rollbrett nach Anspruch 4, **dadurch gekennzeichnet, dass** der federelastische Drehzapfen (15) dadurch drehfest mit der Vorderachse (5) verbunden ist, dass die Vorderachse (5) als Stab ausgebildet ist, der durch ein Loch (18) im Drehzapfen (15) hindurchgesteckt ist.

7. Rollbrett nach Anspruch 6, **dadurch gekennzeichnet, dass** der Drehzapfen (15) mit einer Schraube (12) an dem Befestigungsblock (17) befestigt ist.
